# EUROPÄISCHE PATENTSCHRIFT

(11) **EP 0 563 804 B1**
(45) Veröffentlichungstag und Bekanntmachung des Hinweises auf die Patenterteilung: **27.01.1999**
(21) Anmeldenummer: 93104988.6
(22) Anmeldetag: 25.03.1993
(51) Int. Cl.: H05B 41/29, H05B 41/42, H05B 41/392

(54) **Elektronisches Vorschaltgerät**
Electronic ballast
Ballast électronique

(30) Priorität: 30.03.1992 DE 4210367
(43) Veröffentlichungstag der Anmeldung: 06.10.1993
(73) Patentinhaber: CEAG Sicherheitstechnik GmbH, 59494 Soest (DE)
(72) Erfinder: Jütte, Reinhold, W-3538 Marsberg 9 (DE)
(74) Vertreter: Grünecker, Kinkeldey, Stockmair & Schwanhäusser Anwaltssozietät

(56) Entgegenhaltungen:
- EP-A- 450 728
- WO-A-93/01695
- DE-A- 4 123 187
- FR-A- 2 668 329
- US-A- 4 751 398
- US-A- 4 963 795

## Beschreibung

Die Erfindung betrifft ein elektronisches Vorschaltgerät mit den Merkmalen des Oberbegriffs des Anspruchs 1.

Ein solches Vorschaltgerät ist aus der EP 0450728 A2 bekannt. Solche elektronischen Vorschaltgeräte dienen zum Ansteuern von Leuchtstofflampen sowohl während des Startvorgangs als auch während des Betriebs. Das vorbekannte Vorschaltgerät ist durch zwei unterschiedliche Spannungsquellen versorgbar. Die erste Spannungsquelle ist eine Wechselspannungsquelle und die zweite Spannungsquelle kann eine Gleichspannungsquelle sein. Dabei sind die beiden Spannungsquellen separat angeschlossen, wobei die Gleichspannungsversorgung mit einer Steuerschaltung und zwischen einem Booster und einem DC/AC-Wandler sowie mit einem Ausgabeschaltkreis verschaltet ist. Bei Versorgung von der Wechselspannungsquelle werden die entsprechenden Lampen mit Nennleistung und bei Versorgung mit der Gleichspannungsquelle mit einer gegenüber der Nennleistung reduzierten Leistung betrieben.

Zum Umschalten zwischen diesen beiden Leistungen sind eine Reihe von Kondensatoren, Widerständen, Dioden und ein Schalter vorgesehen. Dabei werden die Lampen bei dem Betrieb mit Gleichspannung mit einer gegenüber der Nennleistung verminderten Leistung betrieben, wobei der Abdunklungsgrad der Lampen durch die Größe eines Widerstandes bestimmt wird.

Im Hinblick auf den Stand der Technik nach EP 0450728 A2 liegt der Erfindung die Aufgabe zugrunde, ein elektronisches Vorschaltgerät mit den Merkmalen des Oberbegriffs des Anspruchs 1 dahingehend zu verbessern, daß das Absenken der Nennleistung auf eine verminderte Leistung während einer gewissen Zeit durchgeführt wird, in der eine Anpassung der Augen von hell auf dunkel erfolgen kann.

Diese Aufgabe wird durch die kennzeichnenden Merkmale des Anspruchs 1 gelöst. Erfindungsgemäß wird mittels einer Überwachungsschaltung bei Anliegen einer Gleichspannung durch Steuerung einer Steuerschaltung einerseits ermöglicht die Spannung am Kondensator und andererseits über die Emitterstromsteuerung den Emitterstrom für einen Transistor so zu verändern, daß insgesamt die Leistung der Lampe innerhalb der sogenannten Adaptionszeit vom Nennwert auf den verminderten Wert abgesenkt wird. Im Gegensatz hierzu erfolgt eine Verminderung der Beleuchtungsstärke bei der EP 0450728 A2 in sehr kurzer Zeit durch Umschalten eines Schalters. Eine verzögerte Verminderung der Lichtstärke ist dabei nicht möglich.

Aus der US-A-4751398 ist ein Vorschaltgerät für eine Entladungslampe bekannt, bei dem entweder Wechsel- oder Gleichspannung von Batterien zuführbar ist. Das Vorschaltgerät weist einen Gleichrichtungsschaltkreis, einen Batterieladeschaltkreis und einen Niederspannungstrennschalter auf. Der letztere dient dazu, die Batterie von der Entladungslampe zu trennen, wenn deren Spannung einen bestimmten Wert unterschreitet.

Die US-A-4963795 zeigt ein weiteres Vorschaltgerät, bei dem entweder eine relativ hohe oder eine relativ niedrige Spannung einer Fluoreszenzlampe zugeführt wird. Außerdem kann die der Lampe zugeführte Spannung kurzzeitig zum Zünden der Lampe angehoben werden, wobei nach deren Zündung der eigentliche Lampen strom wieder auf einen vorbestimmten Pegel abgesenkt wird.

Den beiden vorgenannten US-Patentschriften ist nichts darüber entnehmbar, die Beleuchtungsstärke bei Gleichspannungsbetrieb zu reduzieren und insbesondere diese Reduktion allmählich durchzuführen.

Bei einer vorteilhaften Ausgestaltung der Erfindung kann das Vorschaltgerät einen Hochsetzsteller, dessen Ausgangsspannung der Versorgungsspannung des Resonanzkreiswandlers entspricht, aufweisen, der von der AC/DC-Überwachungsschaltung angesteuert wird. Bei Notlichtbetrieb wird die Ausgangsspannung unter den Wert geregelt, der bei Netzversorgung des Vorschaltgerätes beziehungsweise der Lampe gegeben ist.

Damit kann der Lichtstrom durch Ansteuerung des Resonanzkreiswandlers abgesenkt werden und zur weiteren Absenkung wird die Ausgangsspannung des Hochsetzstellers herabgeregelt. Hochsetzsteller sind an sich bekannt. Sie besitzen in der Hauptsache eine Hochsetzstellerdrossel und einen steuerbaren Halbleiterschalter, beispielsweise einen Feldeffekttransistor, der von einer geeigneten Steuerschaltung angesteuert wird. Erfindungsgemäß wird die Steuerschaltung selbst von der AC/DC-Steuerschaltung angesteuert. Die vom Hochsetzsteller herkommende Spannung wird einem parallel darzulegenden Kondensator zugeführt, der Spannungsquelle für den Resonanzkreiswandler ist.

Bei anliegender Netzwechselspannung liefert dabei das erfindungsgemäße elektronische Vorschaltgerät seine Nennleistung an die angeschlossene Leuchtstofflampe. Wenn auf Notbetrieb umgeschaltet werden muß, wenn z. B. die Netzspannung ausfällt, dann wird das elektronische Vorschaltgerät über die gleichen Anschlußklemmen mit von z. B. einer Batterieanlage herkommenden Gleichspannung betrieben. Über die elektronische AC/DC-Überswachungsschaltung erkennt das elektronische Vorschaltgerät, daß an den Eingangsklemmen Gleichspannung anliegt.

Die Überwachungsschaltung kann beispielsweise durch einen geeigneten Mikroprozessor realisiert sein und den nachgeschalteten Resonanzkreiswandler so ansteuern, daß am Anfang des Notlichtbetriebes der Lichtstrom zunächst 100 % beträgt und nach einer einstellbaren Adaptationszeit des Auges auf einen kleineren Einstellwert herabgeregelt wird. Dieser reduzierte Lichtstrom wird über die gesamte Notlichtdauer konstant gehalten und ist damit unabhängig von Störgrößen wie z. B. vom Absinken der Batteriespannung bei einer Entladung. Somit ist eine konstante Ausleuchtung von Rettungswegen beispielsweise während der gesamten Notlichtdauer sicher gewährleistet. Da durch die Reduktion des Lichtstromes an der Leuchtstofflampe auch die Aufnahmeleistung des elektronischen Vorschaltgerätes und damit auch die Stromaufnahme aus der Batterie sinkt, wird die installierte Batteriekapazität effizient ausgenutzt.

Die Widerstandsanordnung besitzt in bevorzugter Weise einen Feldeffekttransistor, dessen Gate von der AC/DC-Überwachungsschaltung ansteuerbar ist. Ggf. kann eine sog. Emitterstromsteuerschaltung vorgesehen sein, die den steuerbaren Schalter ansteuert; in diesem Fall wird die Emitterstromsteuerschaltung von der AC/DC-Überwachungsschaltung angesteuert.

Weitere vorteilhafte Ausgestaltungen und Verbesserungen sind den weiteren Unteransprüchen zu entnehmen.

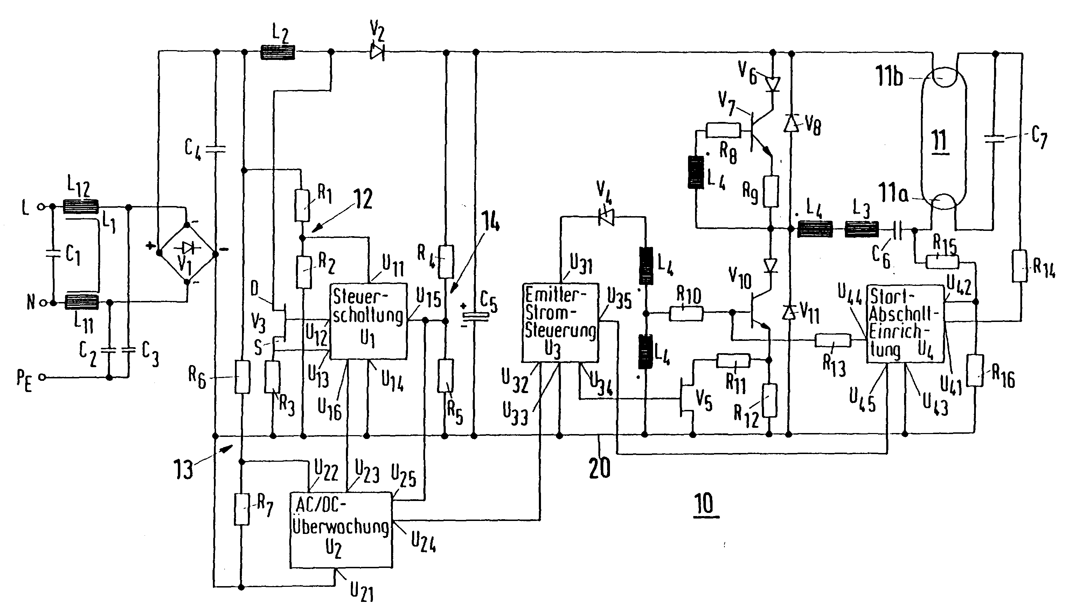

Anhand der Zeichnung, in der ein Ausführungsbeispiel der Erfindung dargestellt ist, sollen die Erfindung sowie weitere vorteilhafte Ausführungen und Verbesserungen sowie weitere Vorteile der Erfindung näher erläutert und beschrieben werden.
Es zeigt die einzige Figur eine schematische Schaltungsanordnung eines elektronischen Vorschaltgerätes nach der Erfindung.

Das elektronische Vorschaltgerät gemäß der Erfindung, das in seiner Gesamtheit mit der Bezugsziffer 10 bezeichnet ist, versorgt eine Leuchtstofflampe 11, die in einer Leuchte eingesetzt ist, die auch als Notleuchte Verwendung findet. Eingangsseitig besitzt das Vorschaltgerät 10 Anschlußklemmen L, N, über die dem Vorschaltgerät 10 Netzwechselspannung oder von einer Batterieanordnung (nicht dargestellt) herkommende Gleichspannung zugeführt wird. Parallel zu den Netzklemmen L, N befindet sich ein Kondensator C₁ und parallel dazu ein Gleichrichter V₁, wobei in Reihe mit den Wechselstromanschlüssen des Gleichrichters V₁ jeweils die Wicklungen L₁₁ und L₁₂ einer Induktivität L₁ geschaltet sind. Zwischen den Wicklungen L₁₁ und L₁₂ und den Wechselstromanschlüssen des Gleichrichters V₁ und Erde (Leiter PE) sind jeweils Kondensatoren C₂ und C₃ eingesetzt, die zusammen mit der Induktivität L₁ und dem Kondensator C₁ ein Funkentstörfilter bilden.

Parallel zu den Gleichstromanschlüssen des Gleichrichters V₁ ist ein Kondensator C₄ geschaltet, und in Reihe mit dem Kondensator C₄ befindet sich eine Hochsetzstellerdrossel L₂ sowie eine Freilaufdiode V₂. Parallel zu dem Kondensator C₄ ist ein Spannungsteiler R₆ und R₇ geschaltet und zwischen der Hochsetzstellerdrossel L₂ und der Freilaufdiode V₂ ist der Drain-Anschluß D eines Feldeffekttransistors V₃ angeschlossen, dessen Source-Anschluß S über einen Widerstand R₃ an der Masseleitung 20 zum Gleichrichter V₁ angeschlossen ist. Das Gate des Transistors V₃ wird von einer Steuerschaltung U₁ angesteuert, dessen Eingang U₁₁ zwischen die Widerstände R₁ und R₂ eines Spannungsteilers 12 geschaltet ist; der Ausgang U₁₂ ist mit dem Gate des Transistors V₃ verbunden. Ein weiterer Anschluß U₁₃ der Steuerschaltung U₁ ist mit dem Source-Anschluß S des Transistors V₃ verbunden, und zwischen dem Verbindungspunkt des Anschlusses U₁₃ mit dem Source-Anschluß S des Transistors V₃ und dem Gleichrichter ist der Widerstand R₃ geschaltet. Über den Ausgang U₁₄ ist die Steuerschaltung U₁ ebenfalls mit der Masseleitung 20 verbunden. Zwischen dem Kondensator C₄ und der Hochsetzstellerdrossel L₂ und dem Gleichrichter V₁ ist der Spannungsteiler 13 vorgesehen, der aus Widerständen R₆ und R₇ besteht; der Widerstand R₁ ist dabei mit seinem einen Bein zwischen den Kondensator C₄ und den Widerstand R₆ angeschlossen. An einem Verbindungspunkt zwischen den beiden Widerständen R₆ und R₇ ist ein Anschluß U₂₂ einer AC/DC-Überwachungsschaltung U₂ angeschlossen. Der Anschluß U₂₃ der Überwachungsschaltung U₂ schließt an einen Anschluß U₁₆ der Steuerschaltung U₁ an. Der Ausgangsanschluß U₂₅ der Überwachungsschaltung U₂ ist mit einem Eingang U₁₅ der Steuerschaltung U1 verbunden. Der Widerstand R₇ ist parallel zu dem Anschluß U₂₂ und dem Anschluß U₂₁ der Überwachungsschaltung U₂ geschaltet, wobei zusätzlich der Anschluß U₂₁ mit der Masseleitung 20 verbunden ist.

Der Fühlereingang U₁₅ der Steuerschaltung U₁ ist an den Verbindungspunkt zweier einen Spannungsteiler 14 bildender Widerstände R₄ und R₅ angeschlossen; das andere Bein des Spannungsteilers 14 ist mit der Kathode der Freilaufdiode V₂ und wieder mit dem Gleichrichter V₁ verbunden. Parallel zu dem Spannungsteiler 14 ist ein Kondensator C₅ geschaltet, der vorzugsweise als Siebelektrolytkondensator ausgebildet ist.

Der Ausgang U₂₄ ist mit dem Eingang U₃₂ einer Emitterstromsteuerung U₃ verbunden, der Anschluß U₃₁ mit der Kathode einer Diode V₄ verbunden ist. An der Anode der Diode V₄ schließt ein Stromwandler L₄ an, der andererseits mit der Masseleitung 20 verbunden ist. An einer Anzapfung der Sekundärseite des Stromwandlers L₄ schließt ein Widerstand R₁₀ an, der mit der Basis eines ersten Schalttransistors V₁₀ gekoppelt ist. Die Basis des Schalttransistors V₁₀ ist über einen Widerstand R₁₃ mit dem Eingang U₄₄ einer Start- und Abschaltschaltung U₄ verbunden, deren Ausgang U₄₅ mit dem Eingang U₃₅ der Emitterstromsteuerschaltung U₃ verbunden ist. Der Emitter des Schalttransistors V₁₀ ist über einen Widerstand R₁₂ mit der Masseleitung 20 verbunden und parallel zu dem Widerstand R₁₂ befindet sich eine Reihenschaltung eines Widerstandes R₁₁ und eines Transistors V₅, dessen Basis mit dem Ausgang U₃₄ der Emitterstromsteuerung U₃ verbunden ist.

Dem ersten Schalttransistor V₁₀ ist ein zweiter Schalttransistor V₇ zugeordnet, dessen Emitter über einen Widerstand R₉ und eine Diode V₉ mit dem Kollektor des Schalttransistors V₁₀ verbunden ist. An dem Kollektor des Transistors V₇ ist die Kathode einer Diode V₆ angeschlossen, deren anderes Bein mit dem Kondensator C₅ und der Kathode der Diode V₂ verbunden ist. Die Basis des Schalttransistors V₇ ist mit dem Verbindungspunkt des Widerstandes R₉ mit der Diode V₈ verbunden; die Verbindungsleitung enthält einen Widerstand R₈ und eine Sekundärwicklung der Induktivität L₄. Parallel zu den Schalttransistoren und parallel auch zu dem Kondensator C₅ ist eine Reihenschaltung zweier Dioden V₁₁ und V₈ angeordnet, wobei der Verbindungspunkt der beiden Diode V₁₁ und V₈ mit dem Verbindungspunkt der Diode V₉ mit dem Widerstand R₉ verbunden ist. Am Anschlußpunkt Anode der Diode V₈ ist eine zweite Teilwicklung der Sekundärwicklung der Induktivität L₄, eine Resonanzkreisdrossel L₃, ein Kondensator C₆, die Wendel lla, ein Kondensator C₇ und die Wendel llb geschaltet; zwischen der Wendel lla und dem Kondensator C₆ schließt ein Bein eines Widerstandes R₁₅ an, dessen anderes Bein einerseits über einen Widerstand R₁₆ mit der Masseleitung 20 und andererseits mit dem Eingang U₄₂ der Start- und Abschaltschaltungsanordnung U₄ verbunden ist. Am Eingang U₄₁ der Schaltungsanordnung U₄ schließt ein Bein eines Widerstandes R₁₄ an, dessen anderes Bein mit dem Verbindungspunkt zwischen der Wendel llb und dem Kondensator C₇ verbunden ist. Eine Ausgangsklemme U₄₃ ist mit der Masseleitung 20 verbunden.

Das Vorschaltgerät gemäß der einzigen Figur ist also aufgebaut aus einem aktiven als Hochsetzsteller wirkenden Oberwellenfilter, welches aus den ein Funkentstörfilter bildenden Komponenten Induktivität L₁, Kondensatoren C₁, C₂ und C₃, dem Gleichrichter V₁, dem Kondensator C₄, der Freilaufdiode V₂, dem Schalttransistor V₃, der Steuerschaltung U₁, den Widerständen R₁ bis R₅ und dem Kondensator C₅ aufgebaut ist. Dem Eingang ist die AC/DC-Überwachungsschaltung zugeordnet, in der detektiert wird, ob das Vorschaltgerät aus Gleich- oder Wechselstromspannung gespeist wird. Die Überwachungsschaltung U₂ ist mit der Steuerschaltung U₁ verbunden, wobei deren Anschlüsse U₂₅ und U₁₅ verbunden sind. Zu dieser Überwachungsschaltung gehören noch die Widerstände R₆ und R₇. Weiterhin besitzt das Vorschaltgerät eine Emitterstromsteuerung U₃, der die Induktivitäten L₄, die Diode V₄ und der Transistor V₅ und der Widerstand R₁₁ zugeordnet sind. Das Vorschaltgerät besitzt weiterhin einen Halbbrückenresonanzkreiswandler, der die Dioden V₆, V₈, V₉ und V₁₁, die Schalttransistoren V₇ und V₁₀, die Widerstände R₈ bis R₁₆, die Sekundärseite der Induktivität L₄, die Resonanzkreisdrossel L₃, ein als Trennkondensator dienenden Kondensator C₆, der Resonanzkondensator C₇ und die Start-Abschalt-Schaltungsanordnung U₄ zugeordnet sind.

Die Wirkungsweise des Vorschaltgerätes 10 ist wie folgt:

Im Netzbetrieb wird die an den Klemmen L und N anliegende Netzspannung nach dem Funkentstörfilter (siehe oben) mit dem Gleichrichter V₁ gleichgerichtet. Am Kondensator C₄ steht eine pulsierende halbwellenförmige Gleichspannung mit der doppelten Netzfrequenz an, und das hieran anschließende aktive Oberwellenfilter (siehe oben) arbeitet nach dem Hochsetzstellerprinzip und formt die pulsierende Gleichspannung in eine höhere konstante Gleichspannung um. Beispielsweise betrage die Netzspannung 230 V; deren Scheitelwert ist 230 V x 1,4 = 322 V; die an dem Kondensator C5 anstehende Gleichspannung beträgt ungefähr 420 V. Mit dieser Gleichspannung wird der Resonanzschwingkreis zum Betrieb der Leuchtstofflampe 11 in ansich bekannter Weise betrieben.

Im Notbetrieb wird an den Klemmen L, N eine Gleichspannung z. B. 220 V eingespeist. Diese Gleichspannung steht auch am Kondensator C₄ an und wird über den Spannungsteiler 13 mit den Widerständen R₆ und R₇ der AC/DC-Überwachungsschaltung U₂ zugeführt. Der Hochsetzsteller mit der Hochsetzstellerdrossel L₂ setzt die an dem Kondensator C₄ anstehende Gleichspannung in eine höhere Gleichspannung, die kleiner ist als die bei Netzbetrieb und ca. 300 V betragen kann, um; die Höhe dieser konstant gehaltenen Spannung am Kondensator C₅ wird durch die Überwachungsschaltung U₂, die die Steuerschaltung U₁ über die Anschlüsse U₂₅-U₁₅ ansteuert, und durch den von der Steuerschaltung U₂ angesteuerten Transistor V₃ und der Drossel L₂ durch den Spannungsteiler 14 mit den Widerständen R₄ und R₅ bestimmt. Die Spannung am Kondensator C₅ kann konstant gehalten werden, auch wenn die Eingangsspannung an den Klemmen L, N auf einen Wert fällt, der im Bereich der Tiefentladungsspannung der Batterie liegt. Dies wird durch den Hochsetzsteller bewirkt, dessen Wirkungsweise an sich bekannt ist. An der Spannung des Kondensators C₅ wird - wie bekannt - ein selbstschwingender hochfrequenter Resonanzkreiswandler betrieben, der die Leuchtstofflampe 11 betreibt. Der Start dieser Schaltung erfolgt durch die Schaltungsanordnung U₄ und danach werden die Transistoren V₇ und V₁₀ durch den Stromwandler L₄ (Sekundärseite) abwechselnd leitend geschaltet. Die an die Leuchtstofflampe 11 abgegebene Leistung wird bestimmt durch die Drossel L₃, den Kondensator C₇ sowie die in den Emitterleitungen der Schalttransistoren V₇ und V₁₀ liegenden Gegenkopplungswiderstände R₉, R₁₁ und R₁₂ und die Höhe der Betriebsspannung der Schaltungsanordnung selbst, also die Spannung am Kondensator C₅. Die Leistung der Lampe kann demgemäß über die Höhe der Spannung am Kondensator C₅ (siehe oben) und durch die Steuerung des Gegenkoppelwiderstandes R₁₁ im Emitterzweig des Schalttransistors V₁₀ durch geeignete Ansteuerung des Feldeffekttransistors V₅ aus der Emitterstromsteuerung U₃ verändert werden. Dadurch besteht die Möglichkeit, daß die an die Lampe abgegebene Leistung in weitem Bereich variiert werden kann. Mit der eingangs beschriebenen AC/DC-Erkennung kann die Leistung und damit der Lichtstrom der Leuchtstofflampe 11 bei Gleichspannungsbetrieb des Vorschaltgerätes abgesenkt werden, was zeitlich erst nach einer gewissen Adaptationszeit, das ist die Anpassung des Auges von Hell auf Dunkel erfolgt, die nach Bedarf einstellbar ist. Das Vorschaltgerät wird demgemäß zunächst mit 100 % Leistung an der Leuchtstofflampe 11 betrieben und die Leistung an der Leuchtstofflampe 11 danach auf den Wert reduziert, den man gemäß der Lichtplanung benötigt. Dabei steuert die AC/DC-Überwachungsschaltung U₂ über den Ausgang U₂₅ die Steuerschaltung U₁, so daß die Spannung am Kondensator C₅ auf einen einzustellenden Wert reduziert wird, und als weitere Möglichkeit den Emitterstrom über den Ausgang U₂₄ über die Emitterstromsteuerung U₃ für den Transistor V₁₀, so daß auch dadurch die Leistung an der Lampe reduziert wird. Beide Absenkarten können gleichzeitig durchgeführt werden.

## Patentansprüche

1. Elektronisches Vorschaltgerät (10) mit einem Eingangsgleichrichter (V₁), dessen Ausgangsspannung einem steuerbare Halbleiterschalter (V₇, V₁₀) enthaltenen Resonanzkreiswandler zuführbar ist, von dem eine Leuchtstofflampe (11) mit Strom versorgt ist, wobei wenigstens einer der steuerbaren Halbleiterschalter (V₇, V₁₀) im Resonanzkreiswandler derart ansteuerbar ist, daß die der Leuchtstofflampe (11) zugeführte Leistung bei Anstehen von Gleichspannung auf einen kleineren Wert als einen Nennwert absenkbar ist, wobei der Eingangsgleichrichter (V₁) mit einer AC/DC-Überwachungsschaltung (U₂) verbunden ist, in der das Anstehen von Gleich- oder Wechselspannung am Eingang (L, N) des Vorschaltgeräts (10) detektierbar ist,
**dadurch gekennzeichnet,**
daß die AC/DC-Überwachungsschaltung (U₂) den wenigstens einen Halbleiterschalter (V₇, V₁₀) zur Leistungsreduktion innerhalb einer einstellbaren Zeit ansteuert und im Emitterkreis eines der steuerbaren Halbleiterschalter (V₁₀) eine Widerstandsanordnung (R₁₁, R₁₂; V₅) vorgesehen ist, deren Widerstandswert abhängig von der Art der Netzspannung von der AC/DC-Überwachaungsschaltung (U₂) veränderbar ist.

2. Vorschaltgerät nach Anspruch 1,
**dadurch gekennzeichnet,**
daß eingangsseitig ein Hochsetzsteller (L₂, V_{3...}) vorgesehen ist, der von der AC/DC-Überwachungsschaltung (U₂) angesteuert ist und der die dem Resonanzkreiswandler bei Gleichstromversorgung am Eingang des Vorschaltgerätes (10) zuführbare Spannung auf einen niedrigerem konstanten Wert als bei Wechselstromversorgung absenkt.

3. Vorschaltgerät nach Anspruch 2,
**dadurch gekennzeichnet,**
daß die Spannung für den Resonanzkreiswandler von einem parallel zum Hochsitzsteller geschalteten Kondensator (C₅) bereitgestellt ist.

4. Vorschaltgerät nach wenigstens einem der vorangehenden Ansprüche,
**dadurch gekennzeichnet,**
daß die Widerstandsanordnung einen Feldeffekttransistor (V₅) aufweist, der mit einem Widerstand (R₁₁) an dem Emitter des Schalttransistors (V₁₀) angeschlossen ist.

5. Vorschaltgerät nach wenigstens einem der vorangehenden Ansprüche,
**dadurch gekennzeichnet,**
daß der steuerbare Halbleiterschalter (V₁₀) von einer Emitterstromsteuerschaltung angesteuert ist, die selbst wiederum von der AC/DC-Überwachungsschaltungsanordnung (U₂) angesteuert ist.

## Claims

1. Electronic ballast (10) comprising an input rectifier (V₁), the output voltage of which can be supplied to a resonant circuit converter containing controllable semi-conductor switches (V₇, V₁₀) and supplying power to a fluorescent lamp (11), at least one of the controllable semi-conductor switches (V₇, V₁₀) in the resonant circuit converter being controllable in such a manner that the power supplied to the fluorescent lamp (11) can be lowered to a value lower than a nominal value when direct voltage is applied, the input rectifier (V₁) being connected to an AC/DC monitoring circuit (U₂) in which the application of direct or alternating voltage at the input (L, N) of the ballast (10) can be detected, characterised in that the AC/DC monitoring circuit (U₂) controls the at least one semi-conductor switch (V₇, V₁₀) in order to reduce the power within an adjustable period of time and a resistor arrangement (R₁₁, R₁₂; V₅) is provided in the emitter circuit of one of the controllable semi-conductor switches (V₁₀), the resistance value of which can be varied depending on the nature of the mains voltage of the AC/DC monitoring circuit (U₂).

2. Ballast according to claim 1, characterised in that a boost chopper (L₂, V₃...) is provided at the input side, is controlled by the AC/DC monitoring circuit (U₂) and lowers the voltage which can be supplied to the resonant circuit converter when direct current is supplied at the input of the ballast (10) to a lower constant value than when alternating current is supplied.

3. Ballast according to claim 2, characterised in that the voltage for the resonant circuit converter is supplied by a capacitor (C₅) connected in parallel with the boost chopper.

4. Ballast according to at least one of the preceding claims, characterised in that the resistor arrangement has a field-effect transistor (V₅) which is connected via a resistor (R₁₁) to the emitter of the switching transistor (V₁₀).

5. Ballast according to at least one of the preceding claims, characterised in that the controllable semi-conductor switch (V₁₀) is controlled by an emitter-current control circuit which is itself in turn controlled by the AC/DC monitoring circuit arrangement (U₂).

## Revendications

1. Ballast électronique (10) comportant un redresseur d'entrée (V₁), dont la tension de sortie peut être envoyée à un convertisseur à circuit résonant, qui contient des interrupteurs commandables à semiconducteurs (V₇, V₁₀) et qui alimente en courant un tube fluorescent (11), dans lequel au moins l'un des interrupteurs commandables à semiconducteurs (V₇, V₁₀) dans le convertisseur à circuit résonant est commandable de telle sorte que la puissance envoyée au tube fluorescent (11) peut être réduite à une valeur plus faible en tant que valeur nominale, dans le cas de la présence d'une tension continue, le redresseur d'entrée (V₁) étant relié à un circuit de contrôle de courant alternatif/courant continu (U₂), dans lequel la présence d'une tension continue ou d'une tension alternative à l'entrée (L, N) du ballast (10) peut être détectée, caractérisé en ce
que le circuit de contrôle de courant alternatif/courant continu (U₂) commande le au moins un interrupteur à semiconducteurs (V₇, V₁₀) pour réduire la puissance pendant un intervalle de temps réglable et que dans le circuit d'émetteur de l'interrupteur commandable à semiconducteur (V₁₀) est prévu un dispositif à résistances (R₁₁, R₁₂ ; V₅) dont la valeur résistive peut être modifiée en fonction du type de la tension du réseau par le circuit de contrôle de courant alternatif/courant continu (U₂).

2. Ballast selon la revendication 1, caractérisé en ce
que sur le côté entrée est prévu un régulateur de marche à régime élevé (L₂, V₃, ...), qui est commandé par le circuit de contrôle de courant alternatif/courant continu (U₂) et qui réduit la tension, qui peut être envoyée au convertisseur à circuit résonant dans le cas d'une alimentation en courant continu appliquée à l'entrée du ballast (10), à une valeur constante plus faible que dans le cas de l'alimentation à courant alternatif.

3. Ballast selon la revendication 2, caractérisé en ce
que la tension pour le convertisseur à circuit résonant est préparée par un condensateur (C₅) branché en parallèle avec le régulateur de marche à régime élevé.

4. Ballast selon au moins l'une des revendications précédentes, caractérisé en ce que le dispositif à résistances comporte un transistor à effet de champ (V₅), qui est raccordé par une résistance (R₁₁) à l'émetteur du transistor de commutation (V₁₀).

5. Ballast selon au moins l'une des revendications précédentes, caractérisé en ce
que l'interrupteur commandable à semiconducteurs (V₁₀) est commandé par un circuit de commande d'émetteur, qui lui-même est commandé à nouveau par le circuit de contrôle de courant alternatif/courant continu (U₂).
